# EUROPEAN PATENT SPECIFICATION

(11) **EP 3 130 219 B1**
(45) Date of publication and mention of the grant of the patent: **18.04.2018**
(21) Application number: 16152417.8
(22) Date of filing: 22.01.2016
(51) Int. Cl.: A01G 23/04, A01G 9/12

(54) **METHOD AND SYSTEM FOR PRODUCING A POTTED TREE WITH A TAPROOT SYSTEM**
VERFAHREN UND SYSTEM ZUR HERSTELLUNG EINES TOPFBAUMS MIT EINEM PFAHLWURZELSYSTEM
PROCÉDÉ ET SYSTÈME DE PRODUCTION D'UN ARBRE EN POT AVEC UN SYSTÈME DE RACINE

(43) Date of publication of application: 15.02.2017
(73) Proprietor: Silvamax A/S, 5500 Middelfart (DK)
(72) Inventor: Roed, Ove Ulrik, 7200 Grindsted (DK)
(74) Representative: Larsen & Birkeholm A/S

(56) References cited:
- WO-A1-2014/060737
- DE-A1- 4 008 580
- NL-C- 2 010 336
- US-A1- 2005 274 072
- US-B1- 8 316 579

## Description

### Technical field of the invention

The present invention relates to potted trees and to systems for producing potted trees.

### Background of the invention

Many varieties of potted trees require some kind of mechanical support to avoid shifting out of position in the loose potting soil. This is especially a problem for trees with a taproot system compared to a fibrous root system. The ordinary wooden stake or stick typically used for this purpose is often unsatisfactory because it is inadequately anchored by the loose potting soil. Furthermore, the stick does not leave a very aesthetic expression of the potted tree.

It is therefore desirable to provide a system, which can eliminate the above problem. WO140607371 relates to a tree anchoring apparatus, a tree anchoring kit and a method of anchoring of a tree. The apparatus, kit and method of the invention are of particular use in anchoring a tree in shallow soil as part of a rooftop garden or use on a brownfield site and in urban environments. Tree anchoring apparatus comprises a) a plurality of interlocking anchor units, each anchor unit having connection means allowing the anchor unit to be secured to at least one adjacent anchor unit; and b) an anchoring point provided for each anchor unit; and a cable or strap securable to at least one of the anchoring points. The plurality of interlocking anchor units are transportable disengaged from one another and can be interlocked with each other in situ to jointly provide a surface for supporting an overburden of soil. The cable or strap can be used to secure the interlocked anchor units to a root ball of a tree located there above.

### Summary of the invention

A first aspect relates to a method for producing a potted tree with a taproot system, comprising the steps of:
i) Providing a tree with a taproot system;
ii) Optionally, washing the taproot system;
iii) Optionally, trimming the taproot system for it to fit into a predefined pot size;
iv) Drilling or punching at least two channels into the taproot;
v) Positioning one or more elongate members into each channel such that at least one of their end portions are positioned outside of the channel and extend away from the taproot;
vi) Mounting the part of the taproot comprising the elongate members into a preselected pot; and
vii) Filling the pot with a filler material.

In one or more embodiments, the method further comprises the step of washing the taproot system, preferably prior to a trimming step.

In one or more embodiments, the method further comprises the step of trimming the taproot system for it to fit into a predefined pot size, preferably before the drilling/punching step, but could in principle be after both the drilling/punching step and the positioning step.

In one or more embodiments, at least one of the channels extend through the taproot. This allows for an easier operation of positioning the elongate members, since only one elongate member being longer than the channel it is positioned in result in two fix points (the end portions).

In one or more embodiments, one or more elongate members are positioned into the channel extending through the taproot such that their end portions are positioned outside of the channel and extend away from the taproot.

In one or more embodiments, at least one channel is drilled or punched into the taproot at a different level along the length of the taproot than another channel. This solution will lead to more stability along the length of the taproot.

In one or more embodiments, the end portions of the elongate members positioned outside of the channel is mounted into fastening means attached to the inner wall of the pot.

A second aspect relates to a potted tree with a taproot system produced by the process/method according to the present invention.

In one or more embodiments, the potted tree comprises a pot comprising fastening means attached to its inner wall.

In one or more embodiments, the potted tree comprises a pot comprising fastening means as part of its inner wall.

In one or more embodiments, the fastening means is a recess, preferably a barbed recess.

A third aspect relates to a system for use in the production of a potted tree, the system comprising:
a. transporting means adapted for moving a tree with a taproot system from one station to another;
b. a drilling or punching station comprising means adapted for drilling or punching a channel in a taproot of a tree entering the drilling or punching station; and
c. a positioning station comprising means adapted for positioning elongate members within the previously formed channels in a taproot of a tree entering the positioning station; wherein the positioning means are configured to position an elongate member into a channel such that at least one of its end portions are positioned outside of the channel and extend away from the taproot.

In one or more embodiments, the transporting means comprises a tree holding means adapted to position the taproot into a predetermined position, such as an angled, vertical or horizontal position.

In one or more embodiments, the transporting means comprises a tree holding means adapted to position the taproot into a vertical position.

In one or more embodiments, the drilling or punching station comprises at least two drilling or punching apparatuses, and wherein a first drilling or punching apparatus is adapted to drill or punch a channel into the taproot at a different level along the length of the taproot than a second drilling or punching apparatus.

In one or more embodiments, the positioning station comprises at least two positioning apparatuses, and wherein a first positioning apparatus is adapted to position a first elongate member into a first channel positioned at a different level along the length of the taproot than a second channel, and wherein a second positioning apparatus is adapted to position a second elongate member into said second channel.

In one or more embodiments, the system further comprises a washing station with one or more spray members adapted to direct water onto the taproot system of a tree entering the washing station.

In one or more embodiments, the system further comprises a trimming station with trimming means configured for trimming the taproot system of a tree entering the trimming station for it to fit into a predefined pot size.

In one or more embodiments, the system further comprises a mounting station comprising means adapted for mounting the taproot system of a tree entering the mounting station into a pot, and adapted to fix an end portion of an elongate member positioned outside of the channel in the taproot of said tree to said pot.

In one or more embodiments, the system further comprises a filling station comprising filling means adapted to fill the pot with a mounted taproot system within with a filler material.

In one or more embodiments, the filling means is further adapted to fill the pot with layers of filling material of different granule size.

In one or more embodiments, the system further comprises means adapted for automatically selecting a tree with a taproot system from a storage station and mounting said tree in the transporting means.

It should be noted that embodiments and features described in the context of one of the aspects of the present invention also apply to the other aspects of the invention.

### Brief description of the figures

Figure 1 shows a perspective view of the system in accordance with various embodiments of the invention;
Figure 2 shows a side view of system in accordance with various embodiments of the invention;
Figure 3 shows an example of a taproot system;
Figure 4 shows a pot for use in the present invention;
Figure 5 shows a potted tree with a taproot system produced by the process/method according to the present invention;
Figure 6A shows the vertical cross-section A-A on Figure 5, where a close-up view of the area C is shown in Figure 6B; and
Figure 7 shows the horizontal cross-section B-B on Figure 5.

### Detailed description of the invention

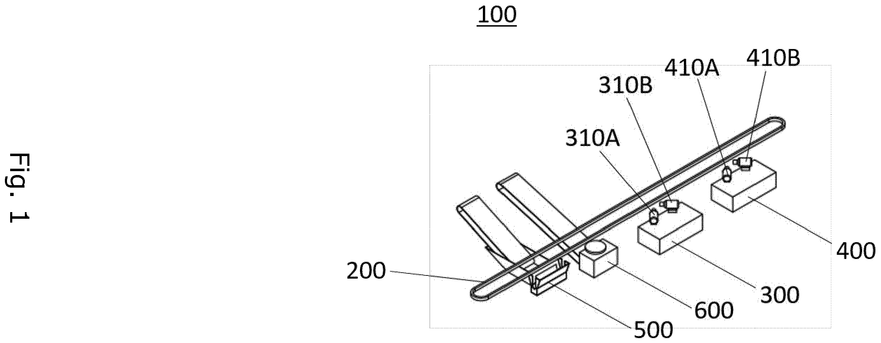

Figure 1 shows a perspective view of the system 100 in accordance with various embodiments of the invention. The system comprises transporting means 200, a washing station 500, a trimming station 600, a drilling or punching station 300, and a positioning station 400.

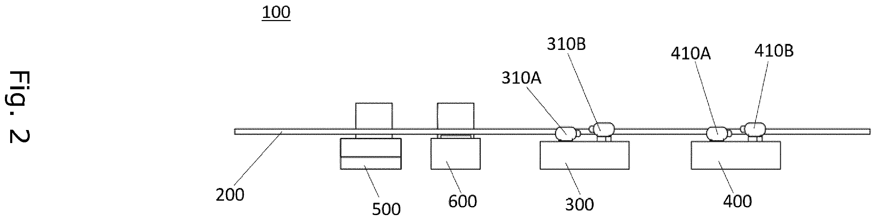

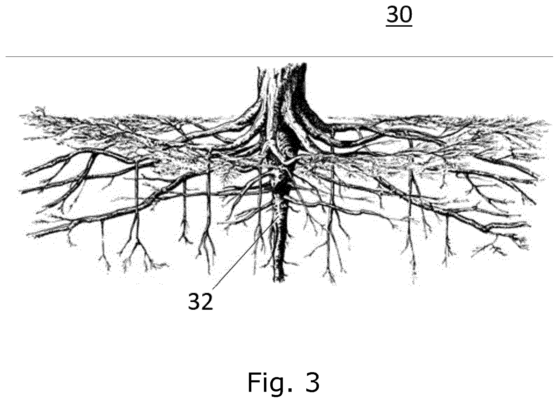

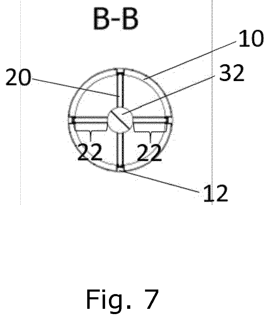

A tree with a taproot system 30 (Figure 3) is positioned in the transporting means 200 adapted for moving the tree from one station to another. The first station is a washing station 500 with one or more spray members (not shown) adapted to direct water onto the taproot system. When cleaned the tree is moved to the trimming station 600 with trimming means (not shown) configured for trimming the taproot system for it to fit into a predefined pot size. When trimmed, the tree is moved to the drilling or punching station 300. The drilling or punching station 300 comprises means 310 adapted for drilling or punching a channel in the trees taproot. The means 310 is here shown as two drilling or punching apparatuses 310A/310B. The first drilling or punching apparatus 310A is adapted to drill or punch a channel into the taproot at a different level along the length of the taproot than the second drilling or punching apparatus 310B. The level difference is shown in Figure 2, where the first drilling or punching apparatus 310A is positioned at a lower level in the station than the second drilling or punching apparatus 310B. When the channels are formed in the taproot, the tree is transported to the positioning station 400. The positioning station 400 comprises means 410 adapted for positioning elongate members 20 (Figure 7) into the previously formed channels in the taproot. The positioning means 410 are configured to position an elongate member 20 into a channel such that at least one of its end portions 22 are positioned outside of the channel and extend away from the taproot 32. The positioning station 400 is here shown with two positioning apparatuses 410A/410B. The first positioning apparatus 410A is adapted to position a first elongate member into a first channel positioned at a different level along the length of the taproot than a second channel. The second positioning apparatus 410B is adapted to position a second elongate member into said second channel.

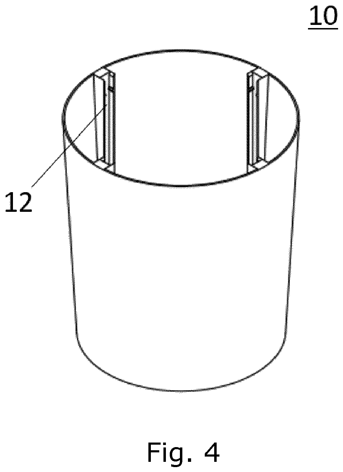

Figure 4 shows a pot 10 for use in the present invention. The pot 10 is shown with four fastening means 12 attached to its inner wall. The fastening means are here exemplified as barbed recesses.

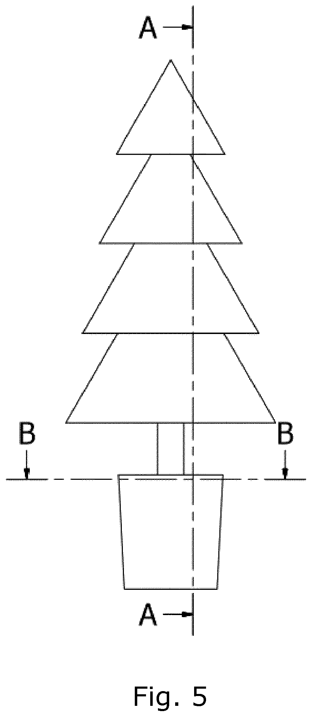

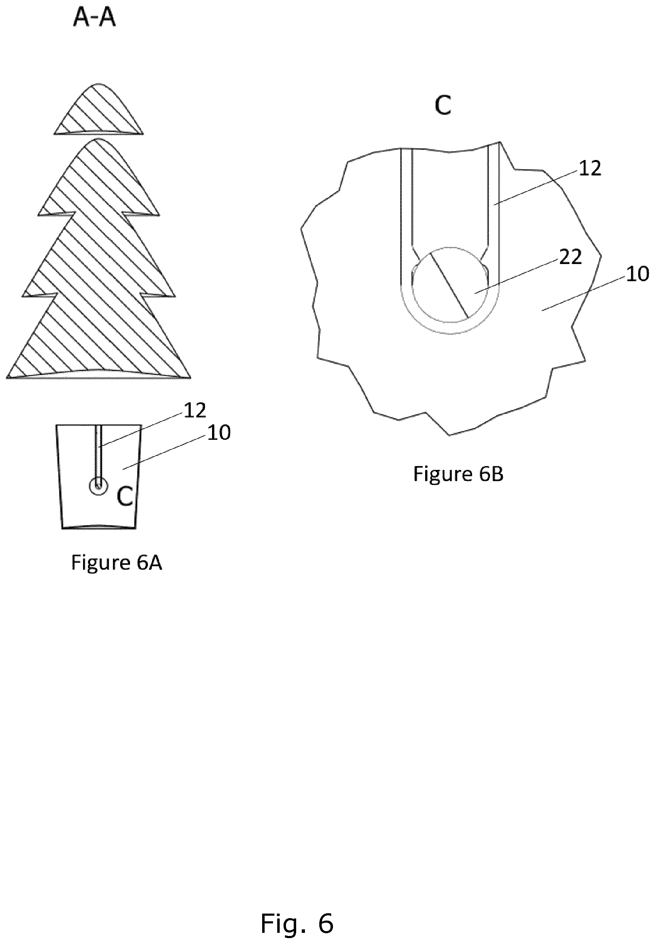

Figure 5 shows a potted tree with a taproot system produced by the process/method according to the present invention. Figure 6A shows the vertical cross-section A-A on Figure 5, where a close-up view of the area C is shown in Figure 6B.

### References

- 100: Combined wall and ventilator module
- 110: First face
- 120: Second face
- 130: Upper face
- 140: Bottom face
- 150: Side face
- 210: First air intake port
- 220: Second air exhaust port
- 230: Fourth air intake port
- 240: Fourth air exhaust port
- 310: First air exhaust port
- 320: Second air intake port
- 330: Third air exhaust port
- 340: Third air intake port
- 410: First air channel
- 420: Second air channel
- 510: Means for directing the air
- 520: Means for directing the air
- 600: Controller
- 700: Airflow heat exchange unit
- 810: Third air channel
- 820: Fourth air channel

## Claims

1. A method for producing a potted tree with a taproot system, comprising the steps of:
i) Providing a tree with a taproot system;
ii) Optionally, washing the taproot system;
iii) Optionally, trimming the taproot system for it to fit into a predefined pot size;
iv) Drilling or punching at least two channels into the taproot;
v) Positioning one or more elongate members into each channel such that at least one of their end portions are positioned outside of the channel and extend away from the taproot;
vi) Mounting the part of the taproot comprising the elongate members into a preselected pot; and
vii) Filling the pot with a filler material.

2. A method according to claim 1, wherein at least one of the channels extend through the taproot.

3. A method according to claim 2, wherein one or more elongate members are positioned into the channel extending through the taproot such that their end portions are positioned outside of the channel and extend away from the taproot.

4. A method according to any one of the claims 1-3, wherein at least one channel is drilled or punched into the taproot at a different level along the length of the taproot than another channel.

5. A method according to any one of the claims 1-4, wherein the end portions of the elongate members positioned outside of the channel is mounted into fastening means attached to the inner wall of the pot.

6. A system (100) for use in the method according to any one of the claims 1-5, the system (100) comprising:
a. transporting means (200) adapted for moving a tree with a taproot system from one station to another;
b. a drilling or punching station (300) comprising means (310) adapted for drilling or punching a channel in a taproot (30) of a tree entering the drilling or punching station (300); and
c. a positioning station (400) comprising means (410) adapted for positioning elongate members (20) into the previously formed channels in a taproot of a tree entering the positioning station (400); wherein the positioning means (410) are configured to position an elongate member (20) into a channel such that at least one of its end portions (22) are positioned outside of the channel and extend away from the taproot (30).

7. A system (100) according to claim 6, wherein the transporting means (200) comprises a tree holding means adapted to position the taproot in a vertical position.

8. A system (100) according to any one of the claims 6-7, wherein the drilling or punching station (300) comprises at least two drilling or punching apparatuses (310), and wherein a first drilling or punching apparatus (310A) is adapted to drill or punch a channel into the taproot at a different level along the length of the taproot than a second drilling or punching apparatus (310B).

9. A system (100) according to claim 8, wherein the positioning station (400) comprises at least two positioning apparatuses (410), and wherein a first positioning apparatus (410A) is adapted to position a first elongate member into a first channel positioned at a different level along the length of the taproot than a second channel, and wherein a second positioning apparatus (410B) is adapted to position a second elongate member into said second channel.

10. A system (100) according to any one of the claims 6-9, further comprising a washing station (500) with one or more spray members adapted to direct water onto the taproot system of a tree entering the washing station (500).

11. A system (100) according to any one of the claims 6-10, further comprising a trimming station (600) with trimming means configured for trimming the taproot system of a tree entering the trimming station (600) for it to fit into a predefined pot size.

12. A system (100) according to any one of the claims 6-11, further comprising a mounting station (700) comprising means adapted for mounting the taproot system of a tree entering the mounting station (700) into a pot (10), and adapted to fix an end portion of an elongate member positioned outside of the channel in the taproot of said tree to said pot.

13. A system according to any one of the claims 6-12, further comprising a filling station comprising filling means adapted to fill the pot with a mounted taproot system within with a filler material.

14. A system according to claim 13, wherein the filling means is further adapted to fill the pot with layers of filling material of different granule size.

15. A potted tree with a taproot system produced by the method according to any one of the claims 1-5.

## Patentansprüche

1. Verfahren zur Herstellung eines Topfbaums mit einem Pfahlwurzelsystem, das die folgenden Schritte umfasst:
i) Bereitstellen eines Baums mit einem Pfahlwurzelsystem;
ii) Wahlweise, Waschen des Pfahlwurzelsystems;
iii) Wahlweise, Beschneiden des Pfahlwurzelsystems, damit es in eine vorbestimmte Topfgröße passt;
iv) Bohren oder Stanzen von mindestens zwei Kanälen in die Pfahlwurzel;
v) Positionieren von einem oder mehreren verlängerten Elementen in jeden Kanal, damit mindestens einer ihrer Endabschnitte außerhalb des Kanals positioniert ist und sich von der Pfahlwurzel weg erstreckt;
vi) Montieren des Teils der Pfahlwurzel, der die verlängerten Elemente umfasst, in einen vorgewählten Topf; und
vii) Befüllen des Topfs mit einem Füllmaterial.

2. Verfahren nach Anspruch 1, wobei sich mindestens einer der Kanäle durch die Pfahlwurzel erstreckt.

3. Verfahren nach Anspruch 2, wobei ein oder mehrere verlängerte Elemente in dem Kanal positioniert sind, der sich derart durch die Pfahlwurzel erstreckt, dass deren Endabschnitte außerhalb des Kanals positioniert sind und sich von der Pfahlwurzel weg erstrecken.

4. Verfahren nach einem der Ansprüche 1-3, wobei mindestens ein Kanal auf einem unterschiedlichen Niveau entlang der Länge der Pfahlwurzel als ein anderer Kanal in die Pfahlwurzel gebohrt oder gestanzt ist.

5. Verfahren nach einem der Ansprüche 1-4, wobei die Endabschnitte der verlängerten Elemente, die außerhalb des Kanals positioniert sind, in Befestigungsmittel, die an der inneren Wand des Topfs befestigt sind, montiert werden.

6. System (100) zur Verwendung in dem Verfahren nach einem der Ansprüche 1-5, wobei das System (100) Folgendes umfasst:
a. ein Transportmittel (200), das dazu ausgelegt ist, einen Baum mit einem Pfahlwurzelsystem von einer Station zu einer anderen Station zu bewegen;
b. eine Bohr- oder Stanzstation (300), die ein Mittel (310) umfasst, das zum Bohren oder Stanzen eines Kanals in ein Pfahlwurzelsystem (30) eines Baums, der in die Bohr- oder Stanzstation (300) eintritt, ausgelegt ist; und
c. eine Positionierungsstation (400), die ein Mittel (410) umfasst, das zum Positionieren von verlängerten Elementen (20) in die zuvor gebildeten Kanäle in einem Pfahlwurzelsystem eines Baums, der in die Positionierungsstation (400) eintritt, ausgelegt ist; wobei das Positionierungsmittel (410) dazu konfiguriert ist, ein verlängertes Element (20) derart in einem Kanal zu positionieren, dass mindestens einer von dessen Endabschnitten (22) außerhalb des Kanals positioniert ist und sich von der Pfahlwurzel (30) weg erstreckt.

7. System (100) nach Anspruch 6, wobei das Transportmittel (200) ein Baumhaltemittel umfasst, das dazu ausgelegt ist, die Pfahlwurzel in einer vertikalen Position zu positionieren.

8. System (100) nach einem der Ansprüche 6-7, wobei die Bohr-oder Stanzstation (300) mindestens zwei Bohr- oder Stanzvorrichtungen (310) umfasst und wobei eine erste Bohr- oder Stanzvorrichtung (310A) dazu ausgelegt ist, einen Kanal in die Pfahlwurzel an einem unterschiedlichen Niveau entlang der Länge der Pfahlwurzel zu bohren oder zu stanzen als eine zweite Bohr-oder Stanzvorrichtung (310B).

9. System (100) nach Anspruch 8, wobei die Positionierungsstation (400) mindestens zwei Positionierungsvorrichtungen (410) umfasst und wobei eine erste Positionierungsvorrichtung (410A) dazu ausgelegt ist, ein erstes verlängertes Element in einem ersten Kanal, der an einem unterschiedlichen Niveau entlang der Länge der Pfahlwurzel positioniert ist als ein zweiter Kanal, zu positionieren, und wobei eine zweite Positionierungsvorrichtung (410B) dazu ausgelegt ist, ein zweites verlängertes Element in dem zweiten Kanal zu positionieren.

10. System (100) nach einem der Ansprüche 6-9, das ferner eine Waschstation (500) mit einem oder mehreren Sprühelementen umfasst, die dazu ausgelegt sind, Wasser auf das Pfahlwurzelsystem eines Baums, der in die Waschstation (500) eintritt, zu richten.

11. System (100) nach einem der Ansprüche 6-10, das ferner eine Beschneidungsstation (600) mit einem Beschneidungsmittel umfasst, das dazu ausgelegt ist, das Pfahlwurzelsystem eines Baums, der in die Beschneidungsstation (600) eintritt, zu beschneiden, damit es in eine vorbestimmte Topfgröße passt.

12. System (100) nach einem der Ansprüche 6-11, das ferner eine Montagestation (700) umfasst, die ein Mittel umfasst, das dazu ausgelegt ist, das Pfahlwurzelsystem eines Baums, der in die Montagestation (700) eintritt, in einem Topf (10) zu montieren, und dazu ausgelegt ist, einen Endabschnitt eines verlängerten Elements, das außerhalb des Kanals in dem Pfahlwurzelsystem des Baums positioniert ist, an dem Topf zu befestigen.

13. System nach einem der Ansprüche 6-12, das ferner eine Befüllstation umfasst, die ein Füllmittel umfasst, das dazu ausgelegt ist, den Topf mit einem montierten Pfahlwurzelsystem darin mit einem Füllmaterial zu befüllen.

14. System nach Anspruch 13, wobei das Füllmittel ferner dazu ausgelegt ist, den Topf mit Schichten von Füllmaterial von unterschiedlichen Granulatgrößen zu befüllen.

15. Topfbaum mit einem Pfahlwurzelsystem, der gemäß dem Verfahren nach einem der Ansprüche 1-5 hergestellt wird.

## Revendications

1. Procédé de production d'un arbre en pot avec un système de racine, comprenant les étampes :
i) de fourniture d'un arbre avec un système de racine ;
ii) éventuellement, de lavage du système de racine ;
iii) éventuellement, d'ajustage du système de racine pour entrer dans une taille de pot prédéfinie ;
iv) de forage ou de perforation d'au moins deux canaux dans la racine ;
v) de positionnement d'un ou de plusieurs éléments allongés, chacun dans un canal de sorte qu'au moins l'une de leurs parties d'extrémité est positionnée en dehors du canal et s'étend à l'opposé de la racine ;
vi) de montage de la partie de la racine comprenant les éléments allongés dans un pot présélectionné ; et
vii) de remplissage du pot avec un matériau de remplissage.

2. Procédé selon la revendication 1, dans lequel au moins l'un des canaux s'étend à travers la racine.

3. Procédé selon la revendication 2, dans lequel un ou plusieurs éléments allongés sont positionnés dans le canal s'étendant à travers la racine de sorte que leurs parties d'extrémité sont positionnées en dehors du canal et s'étendent à l'opposé de la racine.

4. Procédé selon l'une quelconque des revendications 1 à 3, dans lequel au moins un canal est foré ou perforé dans la racine à un niveau différent sur la longueur de la racine par rapport à un autre canal.

5. Procédé selon l'une quelconque des revendications 1 à 4, dans lequel les parties d'extrémité des éléments allongés positionnées en dehors du canal sont montées dans un moyen de fixation fixé à la paroi interne du pot.

6. Système (100) pour une utilisation dans le procédé selon l'une quelconque des revendications 1 à 5, le système (100) comprenant :
a. un moyen de transport (200) conçu pour déplacer un arbre avec un système de racine d'un poste à un autre ;
b. un poste de forage ou de perforation (300) comprenant un moyen (310) conçu pour forer ou perforer un canal dans une racine (30) d'un arbre entrant dans le poste de forage ou de perforation (300) ; et
c. un poste de positionnement (400) comprenant des moyens (410) conçus pour positionner des éléments allongés (20) dans les canaux formés précédemment dans une racine d'un arbre entrant dans le poste de positionnement (400) ; dans lequel les moyens de positionnement (410) sont configurés pour positionner un élément allongé (20) dans un canal de sorte qu'au moins l'une de ses parties d'extrémité (22) est positionné en dehors du canal et s'étend à l'opposé de la racine (30).

7. Système (100) selon la revendication 6, dans lequel le moyen de transport (200) comprend un moyen de maintien d'arbre conçu pour positionner la racine dans une position verticale.

8. Système (100) selon l'une quelconque des revendications 6 à 7, dans lequel le poste de forage ou de perforation (300) comprend au moins deux appareils de forage ou de perforation (310) et dans lequel un premier appareil de forage ou de perforation (310A) est conçu pour forer ou perforer un canal dans la racine à un niveau différent sur la longueur de la racine par rapport à un second appareil de forage ou de perforation (310B).

9. Système (100) selon la revendication 8, dans lequel le poste de positionnement (400) comprend au moins deux appareils de positionnement (410) et dans lequel un premier appareil de positionnement (410A) est conçu pour positionner un premier élément allongé dans un premier canal positionné à un niveau différent sur la longueur de la racine par rapport à un second canal, et dans lequel un second appareil de positionnement (410B) est conçu pour positionner un second élément allongé dans ledit second canal.

10. Système (100) selon l'une quelconque des revendications 6 à 9, comprenant en outre un poste de lavage (500) avec un ou plusieurs éléments de pulvérisation conçus pour diriger de l'eau sur le système de racine d'un arbre entrant dans le poste de lavage (500).

11. Système (100) selon l'une quelconque des revendications 6 à 10, comprenant en outre un poste d'ajustage (600) avec des moyens d'ajustage configurés pour ajuster le système de racine d'un arbre entrant dans le poste d'ajustage (600) pour entrer dans une taille de pot prédéfinie.

12. Système (100) selon l'une quelconque des revendications 6 à 11, comprenant en outre un poste de montage (700) comprenant des moyens conçus pour monter le système de racine d'un arbre entrant dans le poste de montage (700) dans un pot (10) et conçus pour fixer une partie d'extrémité d'un élément allongé positionnée en dehors du canal dans la racine dudit arbre audit pot.

13. Système selon l'une quelconque des revendications 6 à 12, comprenant en outre un poste de remplissage comprenant un moyen de remplissage conçu pour remplir le pot avec un système de racine monté à l'intérieur avec un matériau de remplissage.

14. Système selon la revendication 13, dans lequel le moyen de remplissage est en outre conçu pour remplir le pot avec des couches de matériau de remplissage de taille de granule différente.

15. Arbre en pot avec un système de racine produit par le procédé selon l'une quelconque des revendications 1 à 5.
